# EUROPÄISCHE PATENTSCHRIFT

(11) **EP 1 256 025 B1**
(45) Veröffentlichungstag und Bekanntmachung des Hinweises auf die Patenterteilung: **09.03.2005**
(21) Anmeldenummer: 01909503.3
(22) Anmeldetag: 17.01.2001
(51) Int. Cl.: G02B 6/42

(54) **OPTISCHE KOPPELANORDNUNG**
OPTICAL COUPLING SYSTEM
SYSTEME DE COUPLAGE OPTIQUE

(30) Priorität: 25.01.2000 DE 10003966
(43) Veröffentlichungstag der Anmeldung: 13.11.2002
(73) Patentinhaber: Infineon Technologies AG, 81669 München (DE)
(72) Erfinder: BLANK, Juergen, 14193 Berlin (DE); JEITER, Georg, 12347 Berlin (DE); KUHL, Detlef, 14109 Berlin (DE); PLICKERT, Volker, 14656 Brieselang (DE); DROEGEMUELLER, Karsten, 82223 Eichenau (DE); KROPP, Joerg-Reinhardt, 12355 Berlin (DE); LEININGER, Lars, 10789 Berlin (DE); STANGE, Herwig, 14167 Berlin (DE)
(74) Vertreter: Müller, Wolfram Hubertus, Dr. Dipl.-Phys.
(86) Internationale Anmeldenummer: PCT/DE2001/000237
(87) Internationale Veröffentlichungsnummer: WO 2001/055764

(56) Entgegenhaltungen:
- EP-A- 0 826 998
- EP-A- 0 831 350
- DE-A- 3 617 799
- US-A- 4 199 222
- US-A- 4 381 882

## Beschreibung

Die Erfindung liegt auf dem Gebiet der Lichtleiter und ist bei der Gestaltung von Verbindungen zwischen optoelektronischen Bauelementen, insbesondere lichtemittierenden Bauelementen wie Laserdioden, und mehrmodigen Lichtwellenleitern anzuwenden.

Bei der direkten optischen Kopplung von lichtemittierenden Bauelementen, die eine schwache Wellenführung und damit eine geringe Aufweitung des auftretenden Strahlenbündels besitzt, mit mehrmodigen Lichtwellenleitern wird nur teilweise eine Ausleuchtung des Kernes des jeweiligen Lichtwellenleiters erreicht. Beispielsweise ist dies der Fall bei der Kopplung einer Laserdiode des Typs VCSEL und eines mehrmodigen Lichtwellenleiters. Bei der direkten Ankopplung einer solchen Laserdiode ohne Abbildungssystem an einen mehrmodigen Wellenleiter mit Gradientenprofil, wie er bei der Übertragung auf dem Gebiet der Datenkommunikation überwiegend verwendet wird, werden in dem Lichtwellenleiter nur die Moden niedriger Ordnung angeregt. Dies führt beim Austritt des Lichtstrahls aus dem Lichtwellenleiter zu einem Lichtstrahl mit geringer Winkelaufweitung, sodass schon bei relativ geringen optischen Strahlungspegeln die Richtlinien für die sogenannte Lasersicherheit - die der Vermeidung von Augenschäden dienen soll - überschritten werden kann. Dieses Problem stellt sich mit besonderer Schärfe bei Modulen, bei denen mehrere lichtemittierende Bauelemente als Array angeordnet sind, da hier mehrere optische Wellenleiter eng benachbart liegen und sich demzufolge die abgestrahlten Lichtkegel der einzelnen Wellenleiter derart überlagern, dass es bei der Detektion der Abstrahlung zur Beurteilung der Lasersicherheit zu recht hohen Strahlungspegeln kommen kann.

Zur Ankopplung lichtemittierender oder lichtempfangender Bauelemente an einen Lichtwellenleiter ist es bereits bekannt, zwischen dem Ende des Lichtwellenleiters und dem Bauelement einen Stummel einer Lichtleitfaser anzuordnen und die dem Bauelement zugewandte Stirnseite des Faserstummels gegen die geometrische Achse des Faserstummels zu neigen, um Reflexionen auszuschließen (US 5,937,122 A). Zum Einkoppeln von Licht in einen Mehrmodenwellenleiter hat man auch einen Faserstummel aus einem Einmoden-Lichtwellenleiter verwendet, wobei die dem Lichtwellenleiter zugewandte Stirnfläche des Faserstummels plan an der Stirnfläche des Lichtwellenleiters anliegt (DE 196 45 295 A1).

Ausgehend von einer optischen Koppelanordnung mit den Merkmalen des Oberbegriffs des Patentanspruches 1 liegt der Erfindung die Aufgabe zugrunde, die Koppelanordnung derart auszugestalten, dass bei Gewährleistung der sogenannten Lasersicherheit eine möglichst große optische Leistung übertragen werden kann.

Zur Lösung dieser Aufgabe ist gemäß der Erfindung vorgesehen, dass die Strahlungsquelle und die Einkopplungsfläche eines vielmodigen Faserstummels einander derart zugeordnet sind, dass ein entlang der optischen Achse d.h der Hauptstrahlungsrichtung der Strahlungsquelle emittierter Lichtstrahl als eingekoppelter Lichtstrahl gegen die geometrische Achse des optischen Kernes des Faserstummels um einen Winkel geneigt ist, der größer als 2° und kleiner als der Akzeptanzwinkel des Lichtleiters ist.

Die gemäß der Erfindung vorgesehene Neigung der Hauptrichtung des Lichtstrahles in dem Faserstummel und die Verwendung eines Faserstummels aus einem vielmodigen Stufenindex-Wellenleiter führt dazu, dass die Strahlung infolge der Lichtleitung in der Stufenindexfaser schon auf einer recht kurzen Länge von etwa 5 bis 10 mm sowohl über die Querschnittsfläche als auch in der Winkelverteilung derart homogen verteilt ist, dass an der Austrittsfläche des Stiftstummels eine Strahlung mit aufgeweitetem Strahlwinkel austritt. Dabei ist auch die Lichtleistung auf einen großen Winkelbereich verteilt, so dass die nach den Richtlinien für Lasersicherheit in einem eingeengten Winkelbereich gemessene Intensität besonders gering wird. Dies ist von besonderem Vorteil bei Vielfachanordnungen, um auch bei einem Abstand der einzelnen Lichtwellenleiter von etwa 250 µm die sogenannten Lasersicherheit zu gewährleisten.

Das Maß der gemäß der Erfindung vorgesehenen Neigung der Hauptrichtung des eingekoppelten Lichtstrahles in den Faserstummel hängt im wesentlichen von der Halbwertsbreite der Winkelverteilung der aus der Strahlungsquelle austretenden Strahlung, weiterhin vom Akzeptanzwinkel des Faserstummels sowie vom Akzeptanzwinkel des anzuschließenden Lichtwellenleiters ab. Dieses Maß liegt unter zusätzlicher Berücksichtigung des Koppelwirkungsgrades zwischen der Strahlungsquelle und dem Lichtwellenleiter im Bereich von etwa 2 bis 10°.

Die gemäß der Erfindung vorgesehene, vom Verlauf der geometrischen Achse des optischen Kernes des Faserstummels abweichende, also schiefe Einkopplung der Lichtstrahlen in den Faserstummel kann auf unterschiedliche Weise realisiert werden. Die fertigungstechnisch einfachste Möglichkeit besteht darin, die optische Achse der Strahlungsquelle gegen die geometrische Achse des optischen Kernes des Faserstummels entsprechend zu neigen. - Bezüglich der Anordnung der Komponenten auf einem Trägersubstrat kann es aber auch von Vorteil sein, die optische Achse der Strahlungsquelle und die geometrische Achse des optischen Kernes des Faserstummels koaxial zueinander anzuordnen und die Einkopplungsfläche des Faserstummels gegen dessen geometrische Achse zu neigen. - Besonders zweckmäßig - wegen ihrer axial kurzen Baulänge - ist die Variante, die Einkopplungsfläche des Fasestummels gegen die geometrische Achse des optischen Kernes des Faserstummels zu neigen und die Strahlungsquelle derart radial zum Faserstummel anzuordnen, dass die Strahlung an der Einkopplungsfläche reflektiert wird. Diese Art der Einkopplung ist prinzipiell bekannt (EP 0 404 053 B1), jedoch nicht in Verbindung mit einer schiefen Einkopplung.

Um möglichst viel Lichtleistung in die an den Faserstummel angrenzende Lichtleitfaser einkoppeln zu können, sollte der Durchmesser des optischen Kernes des Faserstummels höchstens das 1,1fache des Durchmessers des optischen Kernes des Lichtleiters betragen.

Drei Ausführungsbeispiele der neuen Kopplungsanordnung sind in den Figuren 1 bis 3 schematisch dargestellt.

Dabei zeigt
Figur 1 die Einkopplung mittels geneigter Strahlungsquelle,
Figur 2 die Einkopplung bei geneigter Stirnfläche des Faserstummels und
Figur 3 die radiale bzw. seitliche Einkopplung bei Reflexion an der geneigten Stirnfläche des Faserstummels.

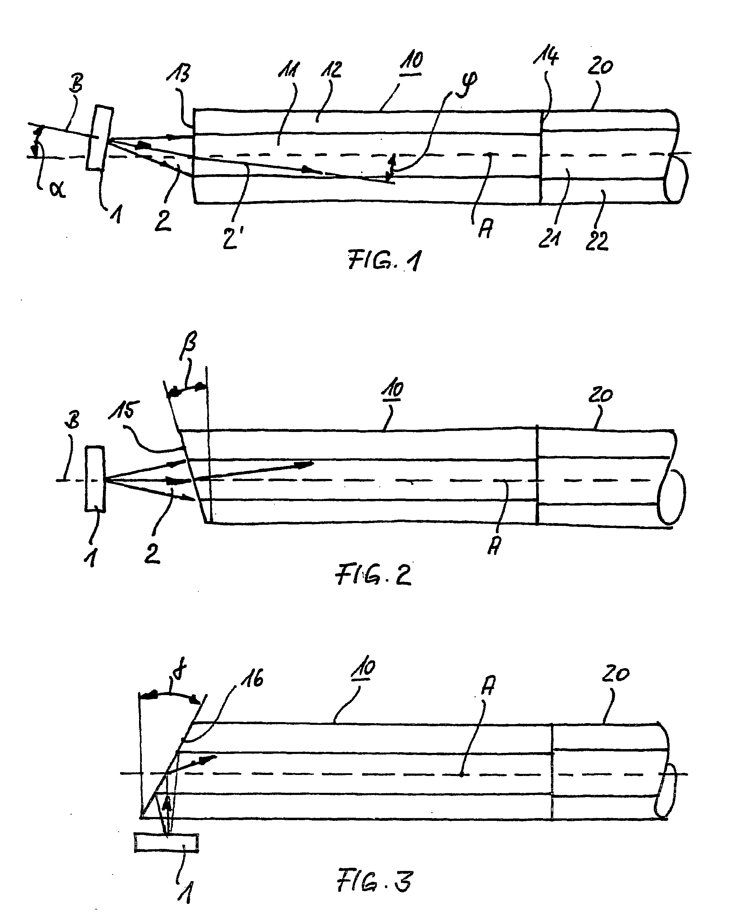

Figur 1 zeigt einen Faserstummel 10, der aus einer Stufenindexfaser mit einem Durchmesser von etwa 50 *µ*m gefertigt ist und zwei vertikal zur Längsachse verlaufende Stirnflächen 13 und 14 aufweist. Der optische Kern 11 des Faserstummels weist einen Durchmesser von etwa 50 *µ*m auf, während der Außendurchmesser des optischen Mantels 12 etwa 125 *µ*m beträgt. Die numerische Apertur des Faserstummels beträgt beispielsweise 0,24, was einem Halbwertswinkel etwa 14° entspricht.

Der Faserstummel 10 ist mit seiner Stirnfläche 14 an eine entsprechende Stirnfläche einer Lichtleitfaser 20 angekoppelt, bei der es sich um eine Gradientenfaser mit einem optischen Kern 21 und einem optischen Mantel 22 handelt, wobei der Durchmesser des optischen Kernes etwa 62,5 *µ*m beträgt; die numerische Apertur beträgt 0,275, was einem Halbwinkel von etwa 16° entspricht.

In die Stirnfläche 13 des Faserstummels strahlt eine Lichtquelle 1 in Form einer Laserdiode einen Lichtstrahl 2 ein, wobei die optische Achse B der Strahlungsquelle 1 und damit die Hauptstrahlrichtung des etwas aufgefächerten Lichtstrahles um einen Winkel α gegen die geometrische Achse A des optischen Kernes des Faserstummels geneigt ist. Dies führt dazu, dass auch der in dem Faserstummel 10 verlaufende Lichtstrahl 2' in seiner Richtung von der geometrischen Achse des optischen Kernes des Faserstummels um einen Winkel ϕ abweicht, wodurch der Lichtstrahl nach einem Lichtweg von einigen Millimetern eine erhebliche Aufweitung erfährt und in diesem Zustand in die Lichtleitfaser 20 eingekoppelt wird.

Gemäß Figur 2 ist der Faserstummel 10 am linken Ende so gestaltet, dass die Stirnfläche 15 gegen die vertikale um einen Winkel β geneigt ist. In diesem Fall ist die Strahlquelle 1 so angeordnet, dass ihre optische Achse B koaxial zur geometrischen Achse A des optischen Kernes des Faserstummels 10 verläuft. Dadurch ergibt sich beim Eintritt des Lichtstrahles 2 in den Faserstummel eine Brechung des Lichtstrahles, die zu dem gewünschten, geneigten Strahlverlauf führt.

Gemäß Figur 3 ist der Faserstummel 10 an seinem linken Ende ebenfalls mit einer geneigten Stirnfläche 16 versehen, hier erfolgt jedoch die Einkopplung des Lichtstrahles von der Seite her, wobei der von der Strahlungsquelle 1 kommende Lichtstrahl an der Stirnfläche 16 reflektiert wird. Dieses kann z. B. dadurch erfolgen, dass die von der Lichtquelle abgegebene Strahlung senkrecht zur geometrischen Achse A des optischen Kernes des Faserstummels erfolgt und die geneigte Stirnfläche 16 einen Winkel γ von ungleich 45° aufweist, beispielsweise 48°.

In allen Fällen ist die schiefe Einkopplung so gestaltet, dass der in den Faserstummel 10 eingekoppelte Lichtstrahl mit der geometrischen Achse des optischen Kernes des Faserstummels einen Winkel von etwa 7° einschließt. Dabei ist davon ausgegangen, dass die Strahlungsquelle 1 einen Halbwertswinkel von etwa 7,5° aufweist, was einer numerischen Apertur von etwa 0,15 entspricht.

## Patentansprüche

1. Optische Koppelanordnung zur Ankopplung einer Strahlungsquelle (1) an einen vielmodigen Lichtleiter (20), mit einer Strahlungsquelle (1) und einem der Strahlungsquelle nachgeordneten, einen optischen Kern und einen optischen Mantel aufweisenden Stummel (10) einer Lichtleitfaser , der eine der Strahlungsquelle (1) zuzuordnende stirnseitige Einkopplungsfläche (13, 15, 16) und eine dem Lichtleiter (20) zugewandte stirnseitige Auskopplungsfläche für einen direkten Anschluss an den Lichtleiter (20) aufweist, wobei der Faserstummel (10) als vielmodiger Stufenindex-Wellenleiter ausgebildet ist, dessen Akzeptanzwinkel größer ist als die Halbwertsbreite der Winkelverteilung der aus der Strahlungsquelle (1) austretenden Strahlung (2),
**dadurch gekennzeichnet,**
**dass** die Strahlungsquelle (1) und die Einkopplungsfläche (13, 15, 16) des Faserstummels (10) einander derart zugeordnet sind, dass ein entlang der optischen Achse (B) der d.h der Hauptstrahlrichtung Strahlungsquelle (1) emittierter Lichtstrahl als eingekoppelter Lichtstrahl (2') gegen die geometrische Achse (A) des Faserstummels (10) um einen Winkel (ϕ) geneigt ist, der größer als 2° und kleiner als der Akzeptanzwinkel des Lichtleiters ist.

2. Koppelanordnung nach Anspruch 1,
**dadurch gekennzeichnet,**
**dass** die optische Achse (B) der Strahlungsquelle (1) gegen die geometrische Achse (A) des optischen Kernes (11) des Faserstummels (10) geneigt ist.

3. Koppelanordnung nach Anspruch 1,
**dadurch gekennzeichnet,**
**dass** die optische Achse (B) der Strahlungsquelle (1) und die geometrische Achse (A) des Faserstummels (10) koaxial zueinander angeordnet-sind und dass die Einkopplungsfläche (15) des Faserstummels (10) gegen die geometrische Achse (A) des optischen Kernes (11) des Faserstummels geneigt ist.

4. Kopplungsanordnung nach Anspruch 1,
**dadurch gekennzeichnet,**
**dass** die Einkopplungsfläche (16) des Faserstummels (10) gegen die geometrische Achse (A) des optischen Kernes (11) des Faserstummels geneigt ist und dass die Strahlungsquelle (1) derart radial zum Faserstummel (10) angeordnet ist, dass die Strahlung von der Einkopplungsfläche (16) in den optischen Kern des Faserstummels (10) reflektiert wird.

5. Koppelanordnung nach einem der Ansprüche 1 bis 4,
**dadurch gekennzeichnet,**
**dass** der Durchmesser des optischen Kernes (11) des Faserstummels (10) maximal das 1,1-Fache des Durchmessers des optischen Kernes (21) des Lichtleiters (22) beträgt.

## Claims

1. Optical coupling system for coupling a radiation source (1) to a multimode optical waveguide (20), having a radiation source (1) and a stub (10) of an optical fibre, which stub is arranged downstream of the radiation source, and has an optical core and an optical cladding, and has an end-side coupling-in face (13, 15, 16) to be assigned to the radiation source (1) and an end-side coupling-out face, directed towards the optical waveguide (20), for a direct connection to the optical waveguide (20), the fibre stub (10) being designed as a multimode step-index waveguide whose acceptance angle is greater than the half-value width of the angular distribution of the radiation (2) emerging from the radiation source (1),
**characterized**
**in that** the radiation source (1) and the coupling-in face (13, 15, 16) of the fibre stub (10) are assigned to one another in such a way that a light beam emitted along the optical axis (B), i.e. the main radiating direction, of the radiation source (1) as coupled-in light beam (2') is inclined relative to the geometrical axis (A) of the fibre stub (10) by an angle (ϕ) which is greater than 2° and less than the acceptance angle of the optical waveguide.

2. Coupling system according to Claim 1,
**characterized**
**in that** the optical axis (B) of the radiation source (1) is inclined relative to the geometrical axis (A) of the optical core (11) of the fibre stub (10).

3. Coupling system according to Claim 1,
**characterized**
**in that** the optical axis (B) of the radiation source (1) and the geometrical axis (A) of the fibre stub (10) are arranged coaxially with respect to one another, and in that the coupling-in face (15) of the fibre stub (10) is inclined relative to the geometrical axis (A) of the optical core (11) of the fibre stub.

4. Coupling system according to Claim 1,
**characterized**
**in that** the coupling-in face (16) of the fibre stub (10) is inclined relative to the geometrical axis (A) of the optical core (11) of the fibre stub, and in that the radiation source (1) is arranged radially with respect to the fibre stub (10) in such a way that the radiation is reflected from the coupling-in face (16) into the optical core of the fibre stub (10).

5. Coupling system according to one of Claims 1 to 4,
**characterized**
**in that** the diameter of the optical core (11) of the fibre stub (10) is at most 1.1 times the diameter of the optical core (21) of the optical waveguide (22).

## Revendications

1. Système de couplage optique pour coupler une source (1) de rayonnement à un guide (20) de lumière multimode, comprenant une source (1) de rayonnement et, monté en aval de la source de rayonnement, un tronçon (10) ayant un coeur optique et une gaine optique d'une fibre de guide de lumière qui a une surface (13, 15, 16) d'entrée du côté frontal associée à la source (1) de rayonnement et une surface de sortie du côté frontal associée au guide (20) de lumière pour un raccordement direct au guide (20) de lumière, le tronçon (10) de fibre étant constitué en guide d'onde à palier d'indice multimode dont l'angle d'admission est plus grand que la largeur de valeur moyenne de la répartition angulaire du rayonnement (2) émis par la source (1) de rayonnement, **caractérisé en ce que** la source (1) de rayonnement et la surface (13, 15, 16) d'entrée du tronçon (10) de fibre sont associées l'une à l'autre de façon à ce qu'un faisceau lumineux émis le long de l'axe (B) optique, c'est-à-dire de la direction principale de rayonnement de la source (1) de rayonnement en tant que faisceau (2') lumineux injecté, est incliné sur l'axe (A) géométrique du tronçon (10) de fibre d'un angle (ϕ) qui est plus grand que 2° et qui est plus petit que l'angle d'admission du guide de lumière.

2. Système de couplage suivant la revendication 1, **caractérisé en ce que** l'axe (B) optique de la source (1) de rayonnement est incliné par rapport à l'axe (A) géométrique du coeur (11) optique du tronçon (10) de fibre.

3. Système de couplage suivant la revendication 1, **caractérisé en ce que** l'axe (B) optique de la source (1) de rayonnement et l'axe (A) géométrique du tronçon (10) de fibre sont coaxiaux, et **en ce que** la surface (15) d'entrée du tronçon (10) de fibre est inclinée par rapport à l'axe (A) géométrique du coeur (11) optique du tronçon de fibre.

4. Système de couplage suivant la revendication 1, **caractérisé en ce que** la surface (16) d'entrée du tronçon (10) de fibre est inclinée par rapport à l'axe (A) géométrique du coeur (11) optique du tronçon de fibre et **en ce que** la source (1) de rayonnement est disposée radialement par rapport au tronçon (10) de fibre, de sorte que le rayonnement soit réfléchi de la surface (16) d'entrée dans le coeur optique du tronçon (10) de fibre.

5. Système de couplage suivant l'une des revendications 1 à 4, **caractérisé en ce que** le diamètre du coeur (11) optique du tronçon (10) de fibre représente au maximum 1,1 fois le diamètre du coeur (21) optique du guide (22) de lumière.
